# EUROPEAN PATENT APPLICATION

(11) **EP 4 819 064 A1**
(43) Date of publication of application: **07.10.2026**
(21) Application number: 25275026.0
(22) Date of filing: 01.04.2025
(51) Int. Cl.: G06V 10/74, G01J 3/02

(54) **DETECTING OBJECTS IN IMAGES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of detecting objects in compressive spectral images, the method implemented by a computer comprising a processor and a memory, the method comprising:
obtaining, using coded aperture imaging, a compressive spectral image of an object;
generating a reference compressive spectral image; and
detecting the object in the obtained compressive spectral image by comparing the obtained compressive spectral image and the generated reference compressive spectral image.

## Description

### FIELD OF THE INVENTION

The present invention relates to detecting objects in images. Particularly, the present invention relates to detecting objects in compressive spectral images.

### BACKGROUND

The detection and subsequent classification of objects in aerial imagery is often of great importance in multiple applications. Hyperspectral imaging (HSI) offers a vast quantity of spectral information about a scene and as sensor technology improves, the amount of spatial data available is also increasing. Traditional imaging techniques capture adjacent pixels in an image at the expense of spatial, spectral, or temporal resolution, or indeed is more common, a trade-off between all three. With this increasing clarity comes an increase in the computational overhead required to both obtain and analyse this data.

Hence, there is a need to improve detection of objects in images.

### SUMMARY OF THE INVENTION

A first aspect provides a method of detecting objects (also known as targets or target objects) in compressive spectral images, the method implemented by a computer comprising a processor and a memory, the method comprising:
obtaining, using coded aperture imaging, a compressive spectral image of an object;
generating a reference compressive spectral image; and
detecting the object in the obtained compressive spectral image by comparing the obtained compressive spectral image and the generated reference compressive spectral image.

In this way, detection of the object in the obtained compressive spectral image is improved.

With the development of compressed-sensing (CS) theory, compressive spectral imaging has received growing attention from researchers because of its elegant combination of optics, mathematics and optimization theory. Compressive spectral imaging has the ability to perform spectral imaging through fewer measurements, which is essential in resource-constrained environments. Compressive spectral imaging techniques often use a coded aperture to block or filter the input light field, namely the encoding process in the compressive sensing pipeline. As the name indicates, this process plays a role in information compression, which is flexible in design and provides the prior knowledge for later reconstruction. Different from the hardware-based encoding, its decoding process requires the computation via designed algorithms.

In one example, the compressive spectral image of the object comprises and/or is a compressive spectral image of scene including the object. In one example, the compressive spectral image of the object comprises a plurality of objects including the object. In one example, the compressive spectral image of the object comprises and/or is a compressive spectral image of scene including a plurality of objects including the object.

In one example, the coded aperture imaging comprises and/or is: single dispersion coded aperture snapshot spectral imaging, SD-CASSI; dual dispersion coded aperture snapshot spectral imaging, DD-CASSI; snapshot coloured compressive spectral imager, SCCSI; spatial-spectral coded aperture snapshot spectral imaging, SS-CASSI; 3D coded aperture snapshot spectral imaging, 3D-CASSI; and/or coded aperture imaging with side imaging. Amplitude-coded methods use coded aperture and dispersive elements for compressive spectral imaging. The classical system is coded aperture snapshot spectral imager (CASSI). To date, there are four CASSI architectures based on different spatial-spectral modulation styles. The first proposed architecture is dual-disperser CASSI (DD-CASSI), which consists of two dispersive elements for spectral shearing with a coded aperture in between. Single-dispersive CASSI (SD-CASSI) is a later work, using one dispersive element placed behind the coded aperture. Snapshot coloured compressive spectral imager (SCCSI) uses also a coded aperture and a dispersive element, but places the coded aperture behind the dispersive element. In comparison to SCCSI that attaches coloured coded aperture (or, colour filter array) to the camera sensor, spatial-spectral CASSI (SS-CASSI) architecture adds the flexibility of coded aperture position between spectral plane and sensor plane. This increases the complexity of the coded-aperture model, which may play a role in improving the system performance. Some deep-learning-based compressive spectral imaging methods have found better results with SS-CASSI.

In one example, the coded aperture of the coded aperture imaging comprises and/or is: an unstructured pseudo-random generated matrix such as a random coded aperture or a Boolean coded aperture; a Poisson disk coded aperture; a void and cluster, VAC, coded aperture; and/or a direct binary search coded aperture.

In one example, generating the reference compressive spectral image comprises simulating coded aperture imaging of the object.

In one example, simulating coded aperture imaging of the object comprises and/or is: simulating single dispersion coded aperture snapshot spectral imaging, SD-CASSI; simulating dual dispersion coded aperture snapshot spectral imaging, DD-CASSI; snapshot coloured compressive spectral imager, SCCSI; spatial-spectral coded aperture snapshot spectral imaging, SS-CASSI; simulating 3D coded aperture snapshot spectral imaging, 3D-CASSI; and/or simulating coded aperture imaging with side imaging.

In one example, the coded aperture of the simulated coded aperture imaging comprises and/or is: an unstructured pseudo-random generated matrix such as a random coded aperture or a Boolean coded aperture; a Poisson disk coded aperture; a void and cluster, VAC, coded aperture; and/or a direct binary search coded aperture.

In one example, simulating coded aperture imaging of the object comprises and/or simulating colour coded aperture imaging of the object. In one example, simulating coded aperture imaging of the object comprises and/or simulating greyscale coded aperture imaging of the object.

In one example, comparing the obtained compressive spectral image and the generated reference compressive spectral image comprises calculating a difference between the obtained compressive spectral image and the generated reference compressive spectral image.

In one example, calculating the difference between the obtained compressive spectral image and the generated reference compressive spectral image comprises calculating an absolute difference or a Euclidean distance between the obtained compressive spectral image and the generated reference compressive spectral image.

In one example, comparing the obtained compressive spectral image and the generated reference compressive spectral image comprises thresholding the difference.

In one example, comparing the obtained compressive spectral image and the generated reference compressive spectral image comprises identifying an energy maximum in the generated reference compressive spectral image and searching for a corresponding energy maximum in the obtained compressive spectral image.

In one example, the energy maximum in the generated reference compressive spectral image comprises and/or is of a spectrum.

In one example, comparing the obtained compressive spectral image and the generated reference compressive spectral image comprises and/or is comparing corresponding pixels of the obtained compressive spectral image and the generated reference compressive spectral image.

In one example, comparing the obtained compressive spectral image and the generated reference compressive spectral image comprises comparing the obtained compressive spectral image and a set of generated reference compressive spectral images, including the generated reference compressive spectral image.

A second aspect provides a computer comprising a processor and a memory configured to implement a method according to the first aspect, a computer program comprising instructions which, when executed by a computer comprising a processor and a memory, cause the computer to perform a method according to the first aspect or a non-transient computer-readable storage medium comprising instructions which, when executed by a computer comprising a processor and a memory, cause the computer to perform a method according to the first aspect.

### BRIEF DESCRIPTION OF THE DRAWINGS

For a better understanding of the invention, and to show how exemplary embodiments of the same may be brought into effect, reference will be made, by way of example only, to the accompanying diagrammatic Figures, in which:
Figure 1 schematically depicts optical flow through a Single Dispersion CASSI (SD-CASSI) system.
Figure 2 schematically depicts optical flow through a Dual Dispersion CASSI (DD-CASSI) system.
Figure 3 shows initial Binary Pattern Creation for Void-and-Cluster a) Flowchart showing the stages to create the initial binary pattern for input into the Void-and-Cluster algorithm to create blue noise Coded Apertures. b) Random binary image created using white noise. c) Uniformly distributed version of b) using the process displayed in a).
Figure 4 is a flow chart showing the phases of the Void and Cluster Algorithm.
Figure 5 schematically depicts simulated discrete optical flow through a Single Dispersion CASSI (SD-CASSI) system.

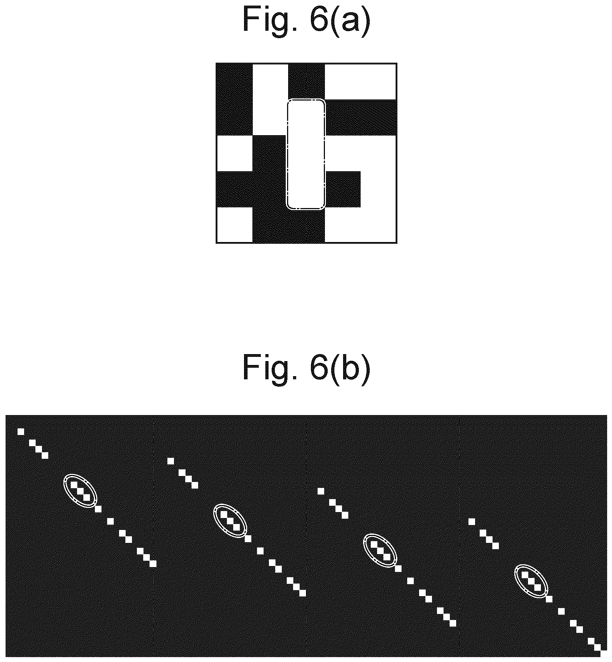

Figure 6 shows examples of a a) Coded Aperture and b) Sensing Matrix for SD-CASSI.
Figure 7 shows examples of a-c) an ensemble of random Coded Apertures and d) the resultant Sensing Matrix for SD-CASSI.
Figure 8 shows examples of a-c) an ensemble of boolean Coded Apertures and d) the resultant Sensing Matrix for SD-CASSI.
Figure 9 schematically depicts simulated discrete optical flow through a Dual Dispersion CASSI (DD-CASSI) system.

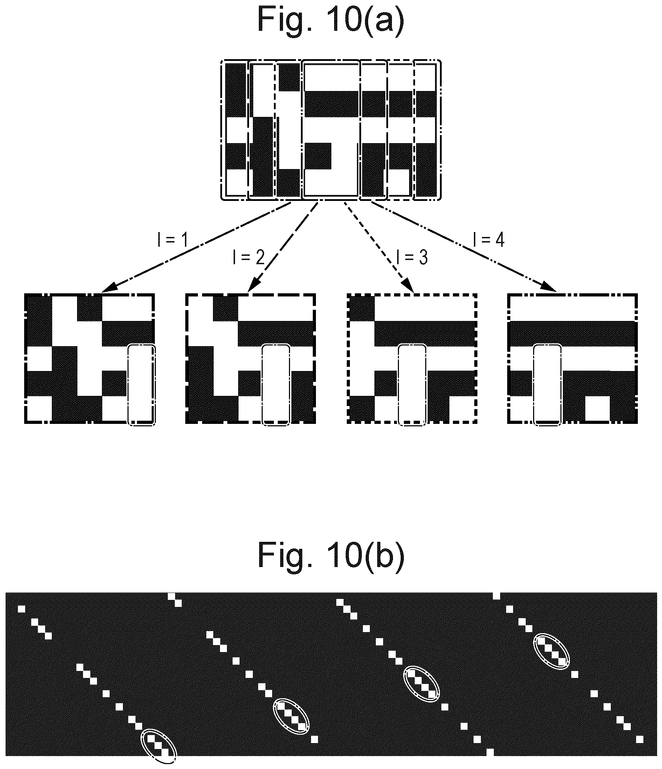

Figure 10 shows an example of DD-CASSI.
Figure 11 shows examples of a-c) an ensemble of random Coded Apertures and d) the resultant Sensing Matrix for DD-CASSI.
Figure 12 shows examples of a-c) an ensemble of random Coded Apertures and d) the resultant Sensing Matrix for DD-CASSI.
Figure 13 shows an example of an obtained compressive spectral image, according to an exemplary embodiment.
Figure 14 shows (a) three target objects included in the obtained compressive spectral image of Figure 13; and (b) the resultant average spectra for the respective target objects.
Figures 15 to 18 show results of comparing the obtained compressive spectral image of Figure 14 and a generated reference compressive spectral image, according to exemplary embodiments.
Figure 19 shows 2x2 compressive spectral images, coded aperture responses and detections from SD, DD, colour SD, and colour DD, for target X, according to an exemplary embodiment.
Figure 20 shows 2x2 compressive spectral images, coded aperture responses and detections from SD, DD, colour SD, and colour DD, for target X, according to an exemplary embodiment.
Figure 21 shows a method, according to an exemplary embodiment.

### DETAILED DESCRIPTION OF THE DRAWINGS

Compressive spectral imaging and the exploitation of the sparsity exhibited by hyperspectral images is described herein.

There are various applications in remote sensing which already benefit from the use of compressive spectral (CS) techniques, including endmember estimation, Object Detection and Image Fusion. The implementation of CS-based image capture (also known as spectral compressive imaging, SCI) in hardware using CASSI-based systems enables CS in multiple imaging applications.

Coded Aperture Snapshot Spectral Imaging (CASSI) is an innovative compressive spectral imaging system that captures a 3D spatio-spectral scene in a single two-dimensional measurement. It allows the capture of high-resolution spectral images using a single camera and a simple optical setup. Unlike traditional hyperspectral scanners that often capture images one pixel, row, or band at a time, CASSI systems capture the spatial and spectral information contained in a scene in a single snapshot. The core principle of CASSI is to use a Coded Aperture to modulate the incoming light as well as some optical shifting to distribute the energy from multiple wavelengths spatially. This encoded representation of an imaged scene is the incident on a sensor which captures rich spatial and spectral information in a single snapshot. This encoded representation of an image can then be decoded using some reconstruction algorithm, such as the Gradient Projection for Sparse Reconstruction (GPSR) algorithm, which is commonly employed in the reconstruction of CASSI measurements.

Multi-shot CASSI models are also known; in practice, this requires using multiple unique CAs to capture multiple representations of the same scene in order to increase the information provided prior to reconstruction.

### Compressed Sensing using a Coded Aperture Snapshot Spectral Imaging (CASSI) Camera

Two models of CASSI systems are described herein: SD-CASSI and DD-CASSI, respectively. Other models such as 3D CASSI and architectures with side imaging are not described as these additions are generally to aid, or augment, in the reconstruction of the imaged scene which is not the focus of this work.

### SD-CASSI

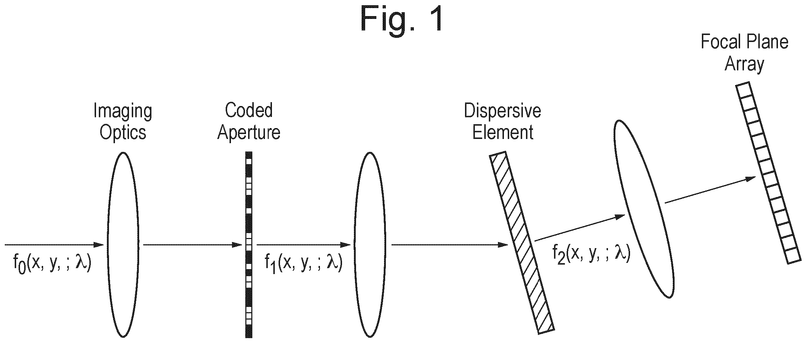

The first model described herein is SD-CASSI, comprising three main elements: the coded aperture which encodes spatial information, a dispersive element which distributes spectral information over some spatial extent, and a focal plane array to capture the encoded and shifted image. Figure 1 shows the optical path through a SD-CASSI system.

From Figure 1, the spectral density of light signals entering the optics is assumed to be *f*₀(x*,y*;*λ*), where *x* and *y* are points in the two spatial components of the image and *λ* is the spectral component at the point (*x*,*y*). Any CA with a discrete pattern T(x,y), with elements *t* ∈ 0,1, represents the transmission of light through the aperture. The spectral density of incoming light can be encoded by T using Equation 1: ${f}_{1} \left(x, y, λ\right) = {f}_{0} \left(x, y, λ\right) T \left(x, y\right)$

The resultant coded field is sheared by a dispersive prism which modulates this encoded signal in the spectral dimension. The spectral density at this stage, *f₂* (*x,y*;*λ*)*,* can be realised using Equation 2: ${f}_{2} \left(x, y, λ\right) = {f}_{0} \left(x+S\left(λ\right),y;λ\right) T \left(xx+S\left(λ\right),y\right)$

For the purposes of the following simulations, the dispersion of the prism, *S*(*λ*)*,* is assumed to be linear over the range of wavelengths A. The image incident on the detector, *g*(*x*,*y*) is given by Equation 3: $g \left(x, y\right) = \int {f}_{2} \left(x, y, λ\right) dλ$ where the light incident on the detector is the integrated spatially shifted spectral channels. This distributes the spectral data across a linear region, corresponding to the number of observed spectral components, along the direction of dispersion of the prism. This gives the appearance of blurring or smearing of objects within the imaged scene as the spectral information and energy relating to a single pixel is spread across some spatial extent.

### DD-CASSI

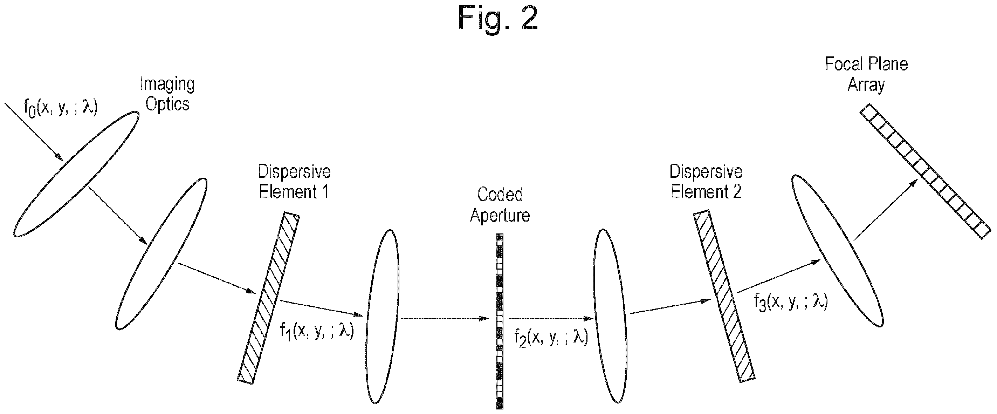

A similar optical flow can be derived for the DD-CASSI system. In a DD-CASSI system, two dispersive elements are used, each polarised in opposite directions, ±*S*(*λ*). This has the effect of first shearing the observed scene, before encoding by some CA, T, followed by a reversal in the shearing operation, returning the now encoded image back to the original domain with the elements passed through the CA wherein it has undergone both spatial and spectral encoding. Figure 2 shows the optical path through a DD-CASSI system.

The spectral density entering the instrument is, again, denoted as be *f*₀(*x,y*;*λ*)*.* The density after the first dispersive element, be *f*₁(*x,*y;*λ*)*,* is once again a function of the dispersion of this prism *S*(*λ*), as given by Equation 4: ${f}_{1} \left(x, y, λ\right) = {f}_{0} \left(x+S\left(λ\right),y;λ\right)$ the dispersed light is then encoded by a CA, T(*x*,*y*), as given by Equation 5: ${f}_{2} \left(x, y, λ\right) = T \left(x, y\right) {f}_{0} \left(x+S\left(λ\right),y;λ\right)$ where the CA, T(*x*,*y*), is required to be larger in comparison to an SD-CASSI system to account for the spread caused by the first dispersive element, observed in *f*₂(*x,y*;*λ*)*.* It can be noted that this CA provides both spatial and spectral encoding as, unlike the SD-CASSI model, the image is sheared prior to encoding. This dispersion is reversed by the second dispersive element and *f*₃(*x,y*;*λ*) is described prior to the detector as given by Equation 6:

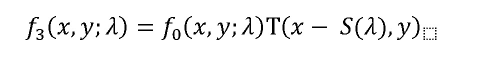

Finally, *f*₃(*x,y*;*λ*) is integrated with respect to *λ* at the focal plane array to form the compressed measurement *g*(*x*,*y*), as given by Equation 7: $g \left(x, y\right) = \int {f}_{3} \left(x, y, λ\right) dλ$ where, near-identically to the SD-CASSI model, the light incident on the detector is the inte- grated output from the second dispersive element. This second dispersive element relocates the dispersed, encoded spectral data back into the original domain of *f*₀(*x,y*;*λ*)*.* This avoids the blurring present in SD-CASSI and concentrates the energy from a single pixel in a single pixel of the observed measurement.

### Coded Aperture Design

Intrinsic to any CASSI system is the CA for modulating and filtering the light through the optical elements of the imager. Designing optimal CAs is critical in the reconstruction of the compressed image incident on the sensor, ensuring sufficient information is retained to sufficiently represent the original scene. Even in applications where reconstruction is not performed, such as the proposed compressed TD scheme in this chapter, the design of CAs is an important consideration and multiple methods of CA generation are detailed in this section.

### Random Coded Aperture Generation

Here, random coded apertures refer to unstructured psuedo-randomly generated matrices. In situations where an ensemble of CAs are generated, the correlation between individual CAs remains uncontrolled, which often leads to sub-optimal sampling. Two CA classes are drawn from such pseudo- randomly generated matrices, henceforth referred to as "Random" CAs and "Boolean" CAs.

### A) Random Coded Apertures

In this method, pixels can be sampled multiple times but also missed entirely which, in scenarios where small or sparse detail is of interest, is clearly undesirable.

### B) Boolean Coded Apertures

Boolean coded apertures do not suffer from oversampling (sampling a pixel multiple times over an ensemble) or undersampling (pixels being missed), but do have poor spatial distribution as there is no spatial regularisation for determining the clustering in the produced CA.

### Poisson Disk Coded Aperture Generation

Another sampling method used was based on the fast Poisson Disk sampling algorithm. Each CA was produced by generating n random points with some minimum spacing, *r*, between them. Similarly to the Random CA, the Poisson Disk CAs had the potential to oversample and undersample pixels as there is no guarantee that a pixel will or will not be sampled in exactly one CASSI shot. The minimal spacing between samples however, allowed for a slight suppression of low frequency noise.

### Void-and-Cluster Coded Aperture Generation

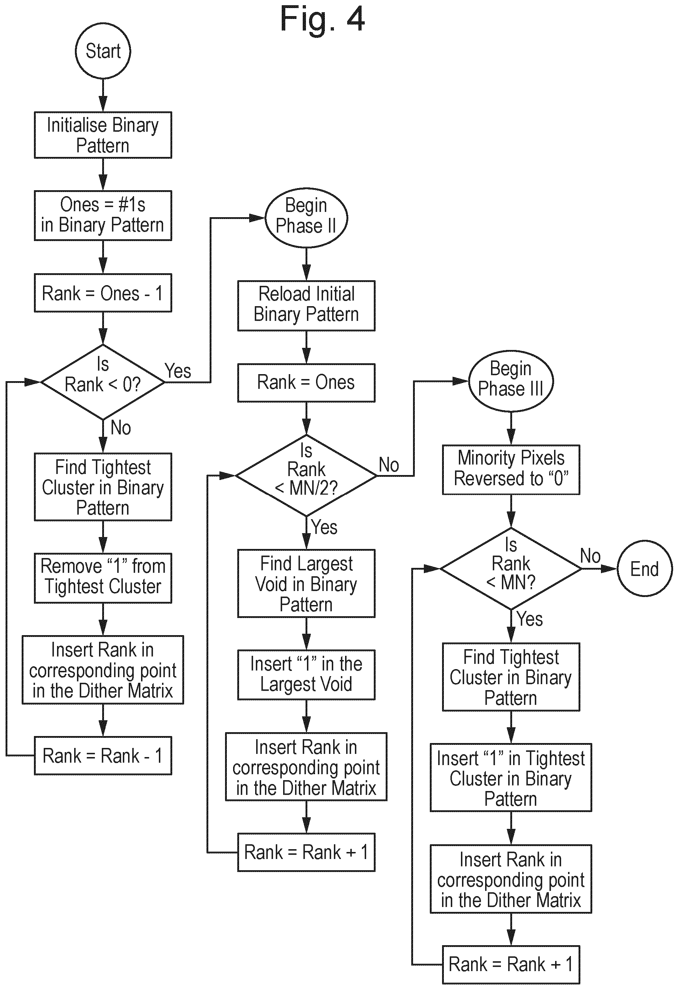

The Void and Cluster (VAC) algorithm is a technique for performing halftoning, the rendering of greyscale mimicking binary images, via the creation of an optimally spaced dither- ing matrix. The VAC algorithm consists of four phases as described in the original paper for generating an *M* × *N* dither array;
1. A randomly generated binary pattern is uniformly distributed using the method shown in Figure 4, the number of ones present in this image is stored as the "Rank" of this image.
2. A "minority" pixel, in this case a "1" is removed from the centre of the tightest cluster of ones and in a separate dither array, the current Rank value is inserted into the corresponding location. The Rank value then decreases by one and this is repeated until the Rank value reaches 0.
3. The original pattern is then recovered and the algorithm recursively finds the location of the largest void, or cluster of "0's", and fills the pixel at the centre with a "1" and the Rank is inserted in the dither array. The Rank is now increase each iteration by one and the stopping condition is when it is equal to (*MN*)/2*.*
4. This phase is identical to the previous with the exception being that the notion of a minority pixel is then changed from "1" to "0" as there are now more "1's" in the binary pattern. As such, clusters of zeroes are targeted and filled with ones until the Rank value is equal MN. As a result, the binary pattern consists solely of ones, and the dither array contains every unique value between 0 and "Rank".

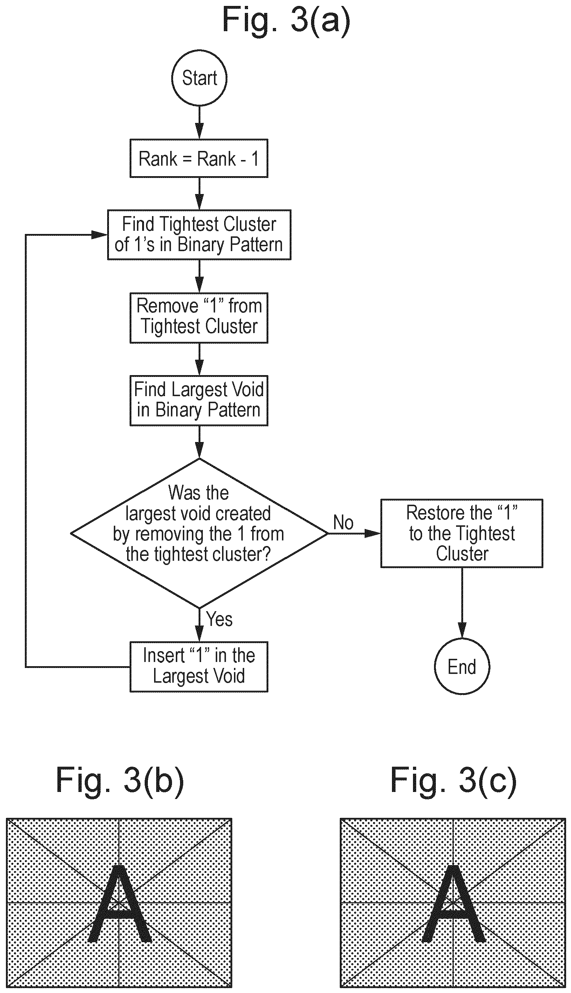

Step 1 is displayed in Figure 3. Steps 2 through 4 are displayed in Figure 4. Steps 3 and 4 can be combined by ignoring the notion of "minority" pixel and instead continuing to fill the largest voids with "1's" as opposed to flipping the polarity and treating the regions of interest as clusters of "0's" as described in [251] . The dither matrix forms the base of the blue noise coded aperture, and is normalised by quantising the array into k levels corresponding to the k shots taken with a multi-shot CASSI system. Because the numerically adjacent Rank values as dispersed optimally in the generated dither array, the resultant binary image exhibits strong blue-noise like distribution. If the number of CASSI shots, k, is equal to 1, the number of quantisation levels is set to 2.

### Simulated CASSI Architectures

Two simulation models were developed in MATLAB, each implementing discretised versions of either the single or dual dispersion CASSI architectures. These were developed to test the use of CASSI for TD are idealised with no additive noise and sensor, optical, and CA deposition defects are not modelled. The parameters used in these models are listed in Table 1.

**Table 1: CASSI Simulation Parameters**

| **Variable** | **Dimensions** | **Description** |
|---|---|---|
| *M* | | Number of columns in the hyperspectral datacube |
| *N* | | Number of rows in the hyperspectral datacube |
| *L* | | Number of bands in the hyperspectral datacube |
| *K* | | Number of snapshots |
| *V* | *M + L -* 1 | Resultant width of sheared measurement |
| F | *M* × *N* × *L* | hyperspectral datacube |
| *f* | *M N L* × 1 | Vectorised hyperspectral datacube |
| ψ | *M N L* × *M N L* | Representative Basis |
| *θ* | *M N L* × 1 | Sparse representation of a hyperspectral datacube |
| *T_{SD}* | *M* × *N* | Coded aperture for single dispersion CASSI |
| *Y_{SD}* | *V* × *N* | Compressive measurement for single dispersion CASSI |
| *y_{SD}* | *NV* × 1 | Vectorised compressive Measurement for single dispersion CASSI |
| *H_{SD}* | *NV K* × *M N L* | Vectorised compressive Measurement for single dispersion CASSI |
| *T_{DD}* | *V* × *N* | Coded aperture for dual dispersion CASSI |
| *Y_{DD}* | *M* × *N* | Compressive measurement for dual dispersion CASSI |
| *y_{DD}* | *M N* × 1 | Vectorised compressive Measurement for dual dispersion CASSI |
| *H_{DD}* | *M N K* × *M N L* | Vectorised compressive Measurement for dual dispersion CASSI |

Although a preferred embodiment has been shown and described, it will be appreciated by those skilled in the art that various changes and modifications might be made without departing from the scope of the invention, as defined in the appended claims and as described above.

### SD- CASSI

The SD-CASSI from Figure 1 is discretised assuming perfect transmission through optical elements and linear dispersion equal to the distance between pixels, Δ*d*, between centre wave- lengths of adjacent spectral channels. With this, Equation 3 can be rewritten where the output of the detector is modelled as Equation 8: ${Y}_{{SD}_{n , m}} = {\sum }_{l = 1}^{L} {F}_{n , \left(m+l-1\right) , l} {T}_{{SD}_{n , \left(m+l-1\right)}} + {ω}_{n , m}$

Simplifying for discrete pixel locations and combining the shear term to form a sensing matrix allows for Equation 8 to be written as a single matrix multiplication as shown in Equation 9: ${y}_{SD} = {H}_{SD} f$ where ***f*** is some vectorised hyperspectral datacube, ***y*** is the observed CASSI measurement, and ***H**_{SD}* is the sensing matrix that describes the simulated encoding and shearing of the imaged scene passing through the SD-CASSI model. Equation 9 allows for a single CASSI measurement to be conducted by a single matrix multiplication.

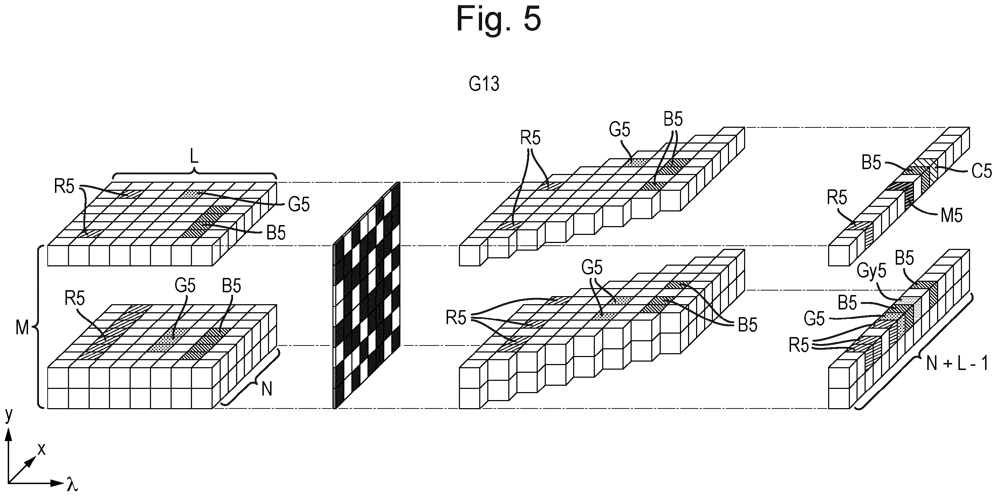

The sensing matrix, ${H}_{SD} ∈ ℝ$, encodes the bandpass and shifting behaviour for each pixel as it passes through the optical elements of the simulated SD-CASSI model as each pixel in the image will have some known behaviour as it passes through the model. This behaviour consists of the encoding, determinant on the CA, and a shear term, which is given by the wavelength of the pixel. Figure 5 shows a simple example of a random CA and the resulting sensing matrix, ***H,*** where *M = N =* 5, *L* = 4 and *K =* 1. In Figure 5, red is represented as R5, green is represented as G5, and blue is represented as B5. Additionally, grey is represented as Gy5, cyan is represented by C5, and maroon is represented by M5.

For spatially rich and detailed scenes, a single CASSI measurement is often insufficient to represent wholly the information present. The number of measurement snapshots can be increased in order to provide extra information, both in a reconstruction sense and in the proposed target detection scheme. During each successive snapshot, a different CA is used, allowing for varied information to be encoded in each *k^{th}* shot. Implementing a Multishot SD-CASSI system, Equation 8 becomes (Equations 10 and 11): ${Y}_{{SD}_{n , m}}^{k} = {\sum }_{l = 1}^{L} {F}_{n , \left(m+l-1\right) , l} {T}_{n , \left(m+l-1\right)}^{k} + {ω}_{n , m}^{k} k = 1 , … , K ,$ ${y}_{SD}^{k} = {{\left[\begin{matrix}diag \left({t}_{SD}^{k}\right) & {0}_{M \times {N}^{2}} & ⋯ & {0}_{M \left(L-1\right) \times {N}^{2}} \\ & diag \left({t}_{SD}^{k}\right) & ⋯ & \\ & & ⋱ & \\ {0}_{M \left(L-1\right) \times {N}^{2}} & {0}_{M \left(L-2\right) \times {N}^{2}} & ⋯ & diag \left({t}_{SD}^{k}\right)\end{matrix}\right]}^{︷}}^{{H}_{SD}^{k}} \left[\begin{matrix}{f}_{1} \\ {f}_{2} \\ ⋮ \\ {f}_{L}\end{matrix}\right]$

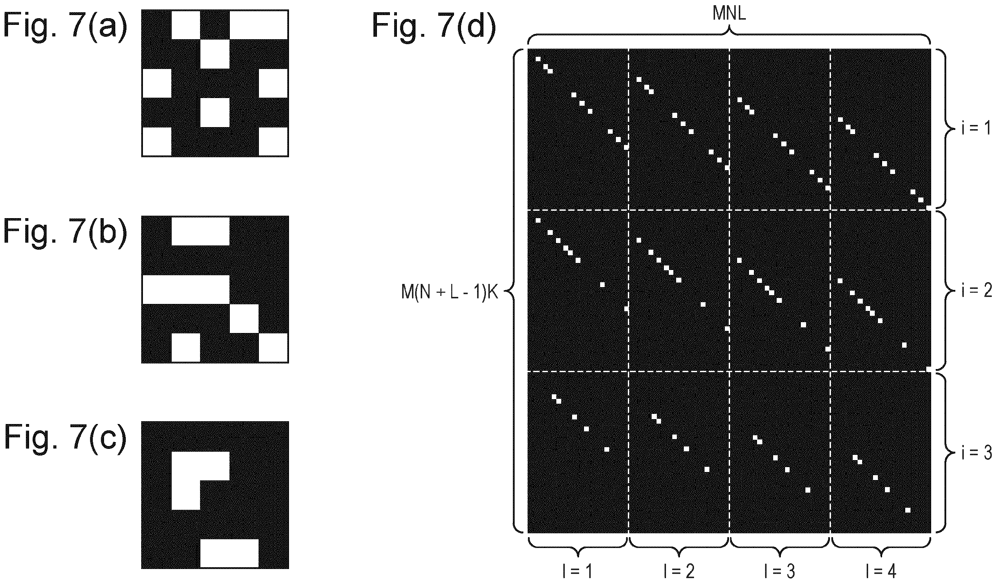

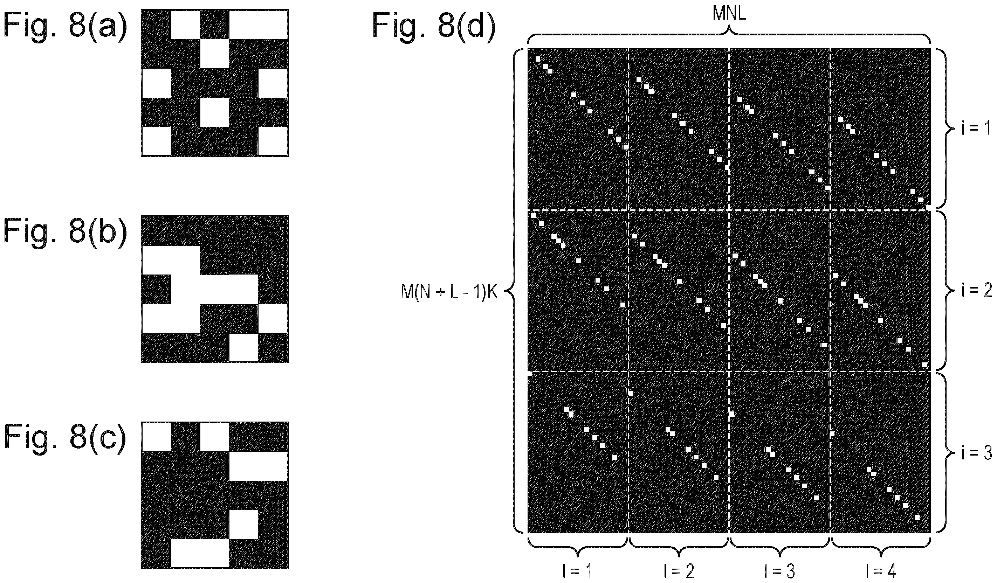

Figures 7 and 8 show simple examples of both random and boolean generated CAs and their associated sensing matrices, ***H**,* where *M = N =* 5, *L =* 4 and *K* = 3.

### DD-CASSI

In addition to the SD-CASSI model, the corresponding Equations are Equations 12 to 14: ${Y}_{{DD}_{n , m}} = {\sum }_{l = 1}^{L} {F}_{n , m , l} {T}_{{SD}_{n , m}} + {ω}_{n , m}$ ${y}_{DD} = {H}_{DD} f$ ${Y}_{{DD}_{n , m}}^{k} = {\sum }_{l = 1}^{L} {F}_{n , m , l} {T}_{n , m}^{k} + {ω}_{n , m}^{k} k = 1 , … , K ,$

As the input image is sheared, each band is passed through a different region of the CA.

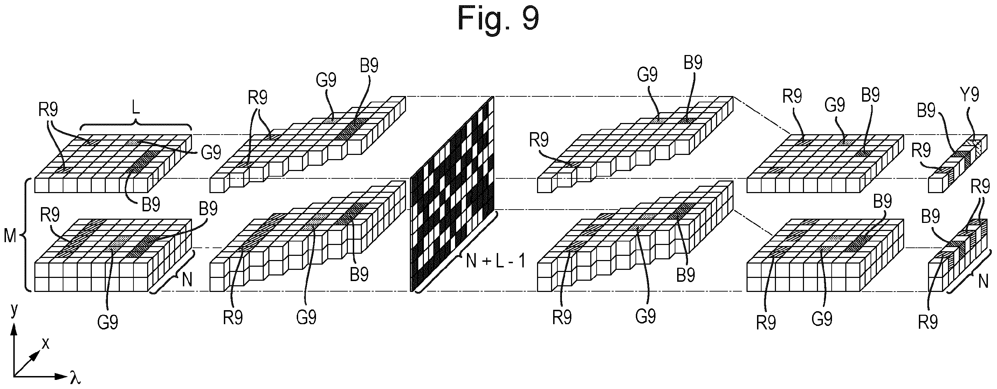

Figure 9 schematically depicts simulated discrete optical flow through a Dual Dispersion CASSI (DD-CASSI) system. In Figure 9, red is represented as R9, green is represented as G9, and blue is represented as B9. Additionally, yellow is represented as Y5. Equation 15: ${y}_{DD}^{i} = {{\left[\left.{\left.diag\left({t}_{DD}^{i}\right)\right|}_{l = 1}\right|\left.{\left.diag\left({t}_{DD}^{i}\right)\right|}_{l = 2}\right|⋯\left|{\left.diag\left({t}_{DD}^{i}\right)\right|}_{l = L}\right.\right]}^{︷}}^{{H}_{DD}^{i}} \left[\begin{matrix}{f}_{1} \\ {f}_{2} \\ ⋮ \\ {f}_{L}\end{matrix}\right]$

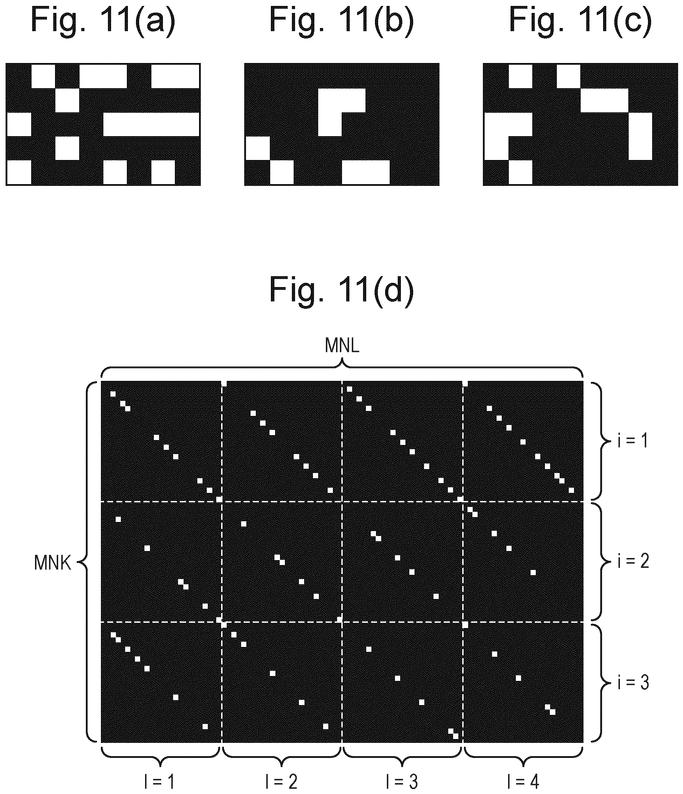

Figure 11 shows examples of a-c) an ensemble of random Coded Apertures and d) the resultant Sensing Matrix for DD-CASSI.

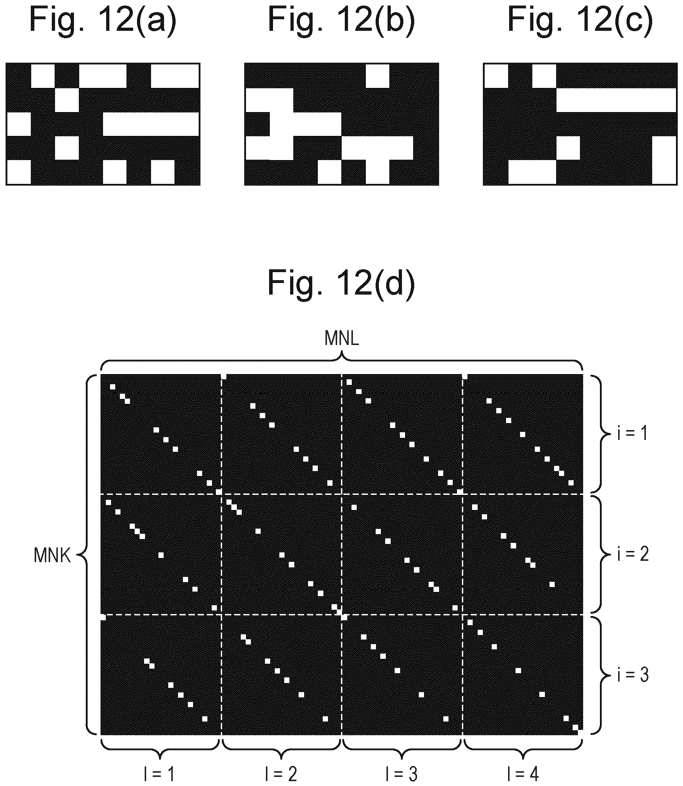

Figure 12 shows examples of a-c) an ensemble of random Coded Apertures and d) the resultant Sensing Matrix for DD-CASSI.

### Colour CASSI Simulation

The relevant Equations 16 and 17 for colour SD-CASSI and DD-CASSI are: ${y}_{DD}^{i} = {{\left[\begin{matrix}{\left.diag\left({t}_{SD}^{i}\right)\right|}_{l = 1} & {0}_{M \times {N}^{2}} & ⋯ & {0}_{M \left(L-1\right) \times {N}^{2}} \\ & {\left.diag\left({t}_{SD}^{i}\right)\right|}_{l = 2} & ⋯ & \\ & & ⋱ & \\ {0}_{M \left(L-1\right) \times {N}^{2}} & {0}_{M \left(L-2\right) \times {N}^{2}} & ⋯ & {\left.diag\left({t}_{SD}^{i}\right)\right|}_{l = L}\end{matrix}\right]}^{︷}}^{{H}_{SD}^{i}} \left[\begin{matrix}{f}_{1} \\ {f}_{2} \\ ⋮ \\ {f}_{L}\end{matrix}\right]$ If block-unblock coded apertures are used, then ${t}_{{SD}_{1}^{i}} = {t}_{{SD}_{2}^{i}} = ⋅ = {t}_{{SD}_{L}^{i}}$ ${y}_{DD}^{i} = {{\left[{\left.diag\left({t}_{DD}^{i}\right)\right|}_{l = 1} {\left.diag\left({t}_{DD}^{i}\right)\right|}_{l = 2} ⋯ {\left.diag\left({t}_{DD}^{i}\right)\right|}_{l = 3}\right]}^{︷}}^{{H}_{DD}^{i}} \left[\begin{matrix}{f}_{1} \\ {f}_{2} \\ ⋮ \\ {f}_{L}\end{matrix}\right]$

### Target Detection using CASSI

To date, pixel-wise object detection has not been explored extensively in a projected CS domain, instead with object detection and tracking most commonly exploiting sparsity in order to separate object from background [prior to any further processing or through the use of a-priori learned features. The ability to detect and classify on a pixel-wise level is of importance in long range and aerial object detection applications as there may often only be a handful of pixels on target.

Initially, the SD-CASSI model was simulated and tested to investigate the effectiveness of a TD approach, however, due to the shearing effect, the energy of targets was spread across multiple pixels and performance suffered as a result, especially around the border of the imaged scene and on the edges of objects. It can be observed that three approaches can be taken; 1) to carry on with the current scenario where boundary information may be lost from detected objects due to the smearing effects from neighbouring pixels, 2) to create a detection algorithm that searches over multiple pixels for the dispersed energy of the target, and 3) to instead utilise a DD-CASSI system which, although more complex and requiring finer calibration when using a physical imaging system, allows for the structure of the input data to be preserved. Options 1 and 3 are explored in this thesis to compare how the two models can be applied to the target detection problem.

Generally, CASSI architectures are heavily dependent on the design of CAs for any particular application. With colour CAs combined with optimal design and the use of spectral selectivity, TD can be applied on the compressed representations of an imaged scene.

### Binary CASSI simulations

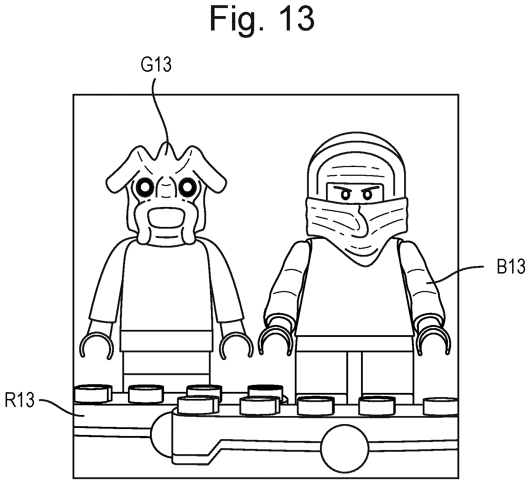

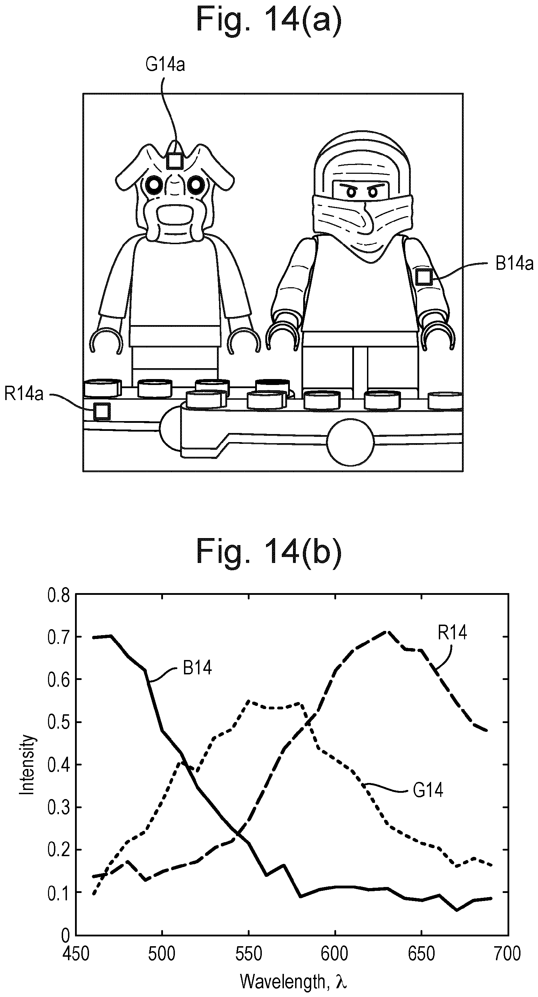

Three target objects were selected from the image of Figure 13: the red brick R13, the green head G13 and the blue outfit B13. These targets were selected as they are significantly distinct from the background and therefore offer the best chance of detection in the sparse domain. The regions R14a, G14a, B14a selected as ground truth target spectra are highlighted in Figure 14(a) and the resultant average target spectra for each object are shown in Figure 14(b).

### Target detection in the sparse domain

The behaviour for each pixel in image **X,** with spatial dimensions *M* and *N,* and *L* spectral bands, as it passes through the optics of a CASSI system is known as the structure of the sensing matrix, ***H*** is known given some dispersion behaviour and a designed CA. This means that the behaviours at locations in the image where there are objects of interest is also predictable and given by Equation 18: ${y}_{x} = Hx$ where $x ∈ {ℝ}^{1 \times MNL}$ is the vectorised version of image, **X**, and *yₓ* is the compressive measurement given some sensing matrix ***H***.

Given a reference spectrum of interest, $r ∈ {ℝ}^{1 \times L}$, a synthetic target image, **T**, can be constructed from this reference spectra by replicating the reference spectrum over the spatial extent of the image under test. The CASSI measurement of on such target reference image is calculated using the same sensing matrix ***H*** given by Equation 19: ${y}_{t} = Ht$ where $t ∈ {ℝ}^{1 \times MNL}$ is the vectorised version of image, **X**, and ***y**ₜ* is the compressive measurement given some sensing matrix ***H*.**

As the behaviour through the optical elements is controlled by the sensing matrix, ***H**,* identical spectra in **X** and **T** will result in identical measurements in ***y**ₓ* and ***y**ₜ.* Comparing the two measurements and identifying regions where the difference between them is low forms the basis of the CASSI-TD approach.

The simplest form of comparison is the absolute difference between the two measurements is given by Equation 20: $y Δ = \left|{y}_{x}-{y}_{t}\right|$

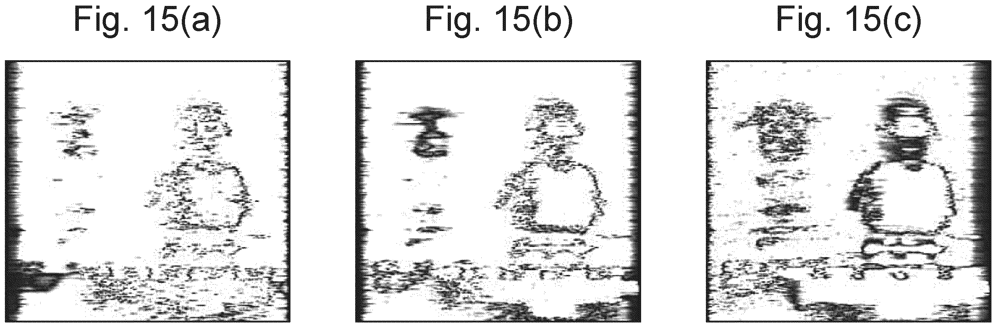

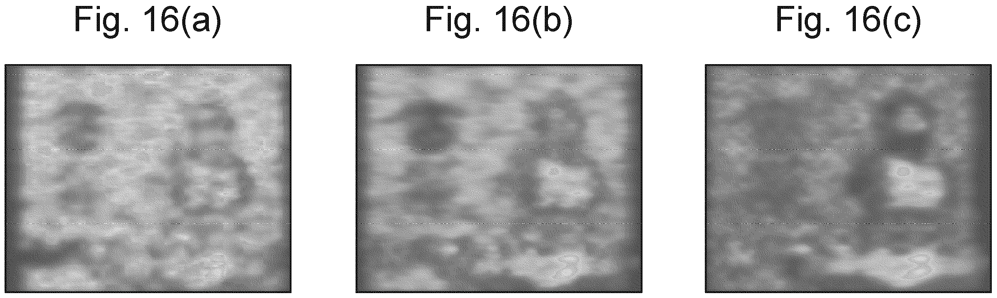

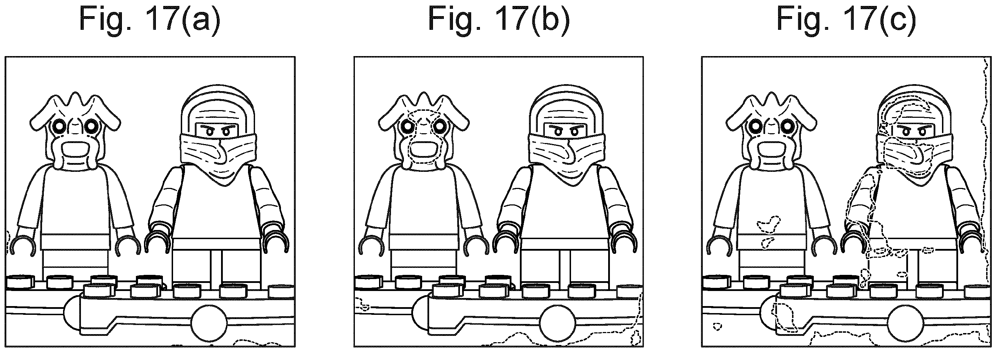

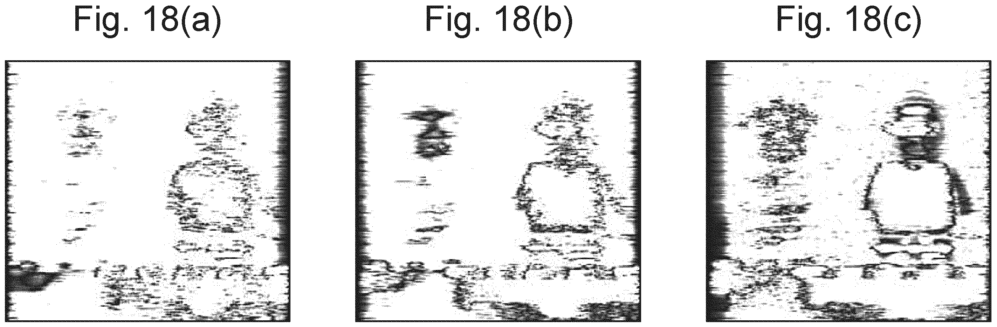

Figures 15 to 18 show results of comparing the obtained compressive spectral image of Figure 13 and a generated reference compressive spectral image, according to exemplary embodiments.

### Colour CASSI Simulations

The process for colour CASSI is identical to that described above.

### Results

### Results on Synthetic Multispectral Imagery

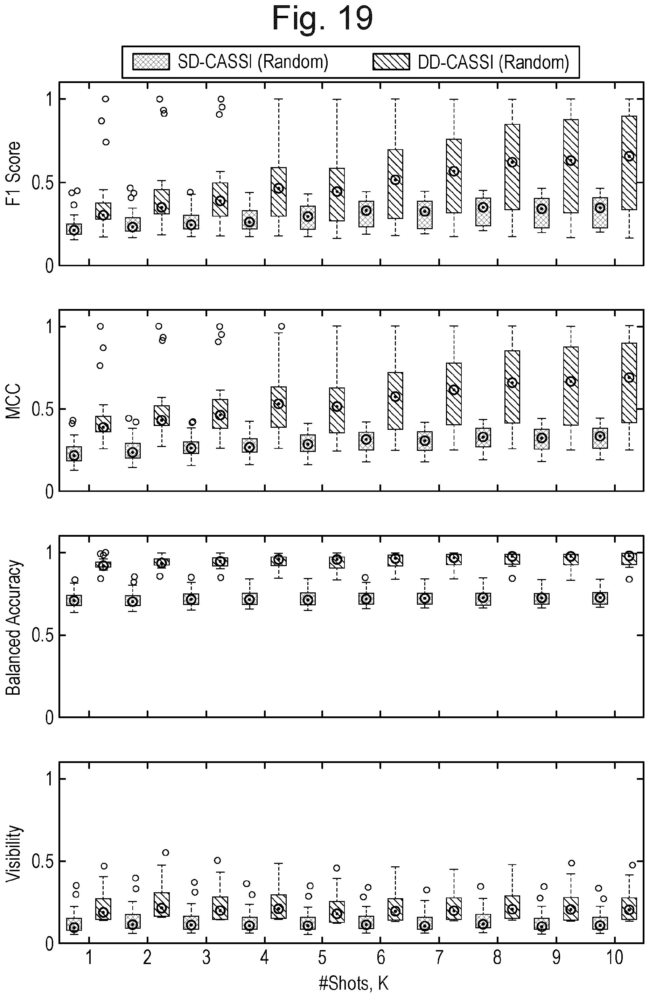

Figure 19 shows 2x2 compressive spectral images, coded aperture responses and detections from SD, DD, colour SD, and colour DD, for target X, according to an exemplary embodiment.

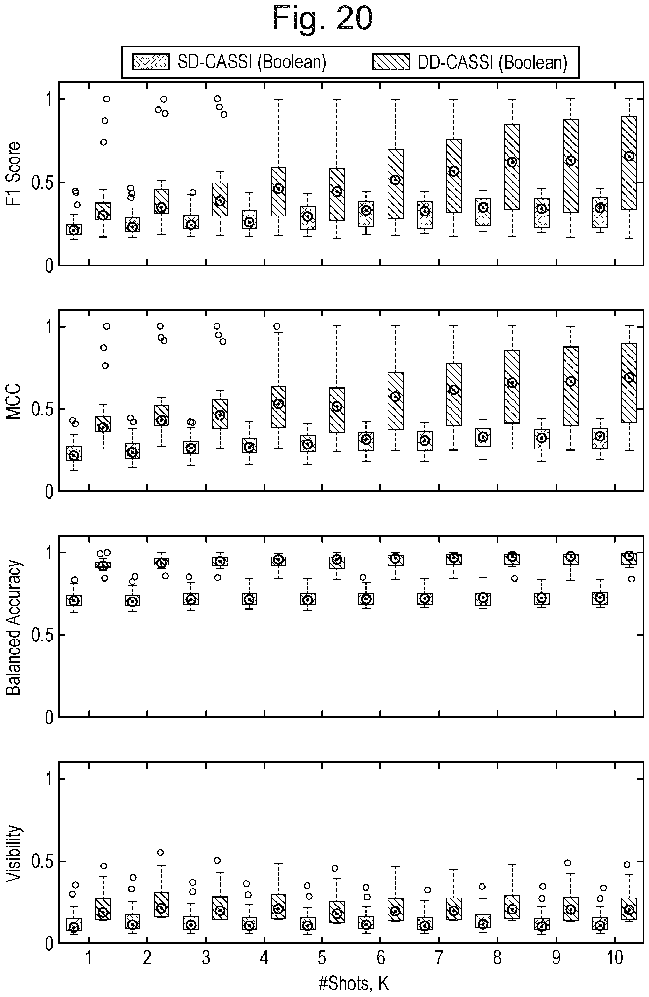

Figure 20 shows 2x2 compressive spectral images, coded aperture responses and detections from SD, DD, colour SD, and colour DD, for target X, according to an exemplary embodiment.

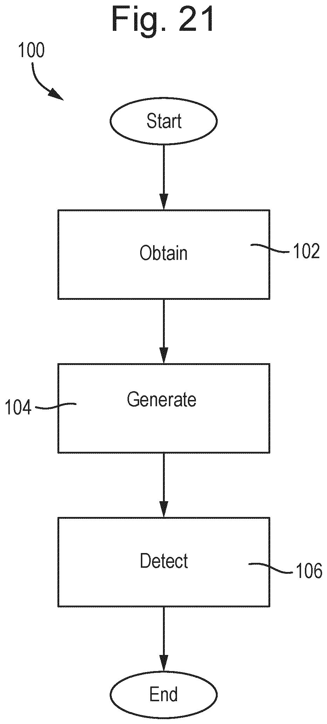

Figure 21 shows a method 100, according to an exemplary embodiment.

The method 100 is of detecting objects in compressive spectral images, the method 100 implemented by a computer comprising a processor and a memory, the method 100 comprising:
obtaining 102, using coded aperture imaging, a compressive spectral image of an object;
generating 104 a reference compressive spectral image; and
detecting 106 the object in the obtained compressive spectral image by comparing the obtained compressive spectral image and the generated reference compressive spectral image.

The steps of obtaining 102 and generating 104 may occur in any order, asynchronously to one another. For example, step 102 followed by step 104; or, step 104 followed by step 102. Alternatively, steps 102 and 104 may occur substantially simultaneously, or at least partly temporally overlapping.

The method 100 may include any steps described herein.

### Summary

1. DD requires more optical elements and a larger CA than SD;
2. SD spreads energy over a linear region proportional to the number of wavelengths present in the image. Not only does this complicate the target detection but also limits the right and left hand edges of the image in their efficacy to detect;
3. Similar to previous but the edges of objects are often hard to detect as their signature is either spread amongst neighbouring pixels, or is obfuscated by spread energy from their neighbours;
4. More sophisticated methods beyond the absolute difference or Euclidean distance between an observed measurement and the expected reference, such as Mask RCNN (or some other region based metric), may be used to better improve the TD-CASSI approach presented.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A method of detecting objects in compressive spectral images, the method implemented by a computer comprising a processor and a memory, the method comprising:
obtaining, using coded aperture imaging, a compressive spectral image of an object;
generating a reference compressive spectral image; and
detecting the object in the obtained compressive spectral image by comparing the obtained compressive spectral image and the generated reference compressive spectral image.

2. The method according to claim 1, wherein the coded aperture imaging comprises and/or is: single dispersion coded aperture snapshot spectral imaging, SD-CASSI; dual dispersion coded aperture snapshot spectral imaging, DD-CASSI; 3D coded aperture snapshot spectral imaging, 3D-CASSI; and/or coded aperture imaging with side imaging.

3. The method according to any previous claim, wherein the coded aperture of the coded aperture imaging comprises and/or is: an unstructured pseudo-random generated matrix such as a random coded aperture or a Boolean coded aperture; a Poisson disk coded aperture; a void and cluster, VAC, coded aperture; and/or a direct binary search coded aperture.

4. The method according to any previous claim, wherein generating the reference compressive spectral image comprises simulating coded aperture imaging of the object.

5. The method according to claim 4, wherein simulating coded aperture imaging of the object comprises and/or is: simulating single dispersion coded aperture snapshot spectral imaging, SD-CASSI; simulating dual dispersion coded aperture snapshot spectral imaging, DD-CASSI; simulating 3D coded aperture snapshot spectral imaging, 3D-CASSI; and/or simulating coded aperture imaging with side imaging.

6. The method according to any of claims 4 to 5, wherein the coded aperture of the simulated coded aperture imaging comprises and/or is: an unstructured pseudo-random generated matrix such as a random coded aperture or a Boolean coded aperture; a Poisson disk coded aperture; a void and cluster, VAC, coded aperture; and/or a direct binary search coded aperture.

7. The method according to claim any of claims 4 to 6, wherein simulating coded aperture imaging of the object comprises and/or simulating colour coded aperture imaging of the object.

8. The method according to any previous claim, wherein comparing the obtained compressive spectral image and the generated reference compressive spectral image comprises calculating a difference between the obtained compressive spectral image and the generated reference compressive spectral image.

9. The method according to claim 8, wherein calculating the difference between the obtained compressive spectral image and the generated reference compressive spectral image comprises calculating an absolute difference or a Euclidean distance between the obtained compressive spectral image and the generated reference compressive spectral image.

10. The method according to any of claims 8 to 9, wherein comparing the obtained compressive spectral image and the generated reference compressive spectral image comprises thresholding the difference.

11. The method according to any previous claim, wherein comparing the obtained compressive spectral image and the generated reference compressive spectral image comprises identifying an energy maximum in the generated reference compressive spectral image and searching for a corresponding energy maximum in the obtained compressive spectral image.

12. The method according to claim 11, wherein the energy maximum in the generated reference compressive spectral image comprises and/or is of a spectrum.

13. The method according to any previous claim, wherein comparing the obtained compressive spectral image and the generated reference compressive spectral image comprises and/or is comparing corresponding pixels of the obtained compressive spectral image and the generated reference compressive spectral image.

14. The method according to any previous claim, wherein comparing the obtained compressive spectral image and the generated reference compressive spectral image comprises comparing the obtained compressive spectral image and a set of generated reference compressive spectral images, including the generated reference compressive spectral image.

15. A computer comprising a processor and a memory configured to implement a method according to any of claims 1 to 14, a computer program comprising instructions which, when executed by a computer comprising a processor and a memory, cause the computer to perform a method according to any of claims 1 to 14 or a non-transient computer-readable storage medium comprising instructions which, when executed by a computer comprising a processor and a memory, cause the computer to perform a method according to any of claims 1 to 14.
